(19) Europäisches Patentamt / European Patent Office / Office européen des brevets

(11) **EP 4 624 802 A1**

(12) **DEMANDE DE BREVET EUROPEEN**

(43) Date de publication:
**01.10.2025 Bulletin 2025/40**

(21) Numéro de dépôt: **25166666.5**

(22) Date de dépôt: **27.03.2025**

(51) Classification Internationale des Brevets (IPC):
**F21V 8/00** *(2006.01)* **G02B 19/00** *(2006.01)*

(52) Classification Coopérative des Brevets (CPC):
**G02B 19/0028; G02B 19/0061;** G02B 6/0021

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **28.03.2024 IN 202411025291**
**23.04.2024 FR 2404183**

(71) Demandeur: **SCHNEIDER ELECTRIC INDUSTRIES SAS**
**92500 Rueil-Malmaison (FR)**

(72) Inventeurs:
• BIANCHI, Thomas
  38100 GRENOBLE (FR)
• NARAYANAN, Shreenath
  PIN 671318 KASARGOD DIST (IN)
• YOUSFI, Youssef
  16400 PUYMOYEN (FR)

(74) Mandataire: **Lavoix**
**62, rue de Bonnel**
**69448 Lyon Cedex 03 (FR)**

(54) **GUIDE LUMIÈRE ET APPAREIL ÉLECTRIQUE ASSOCIÉ**

(57) Ce guide lumière (110) comprend comprenant un corps (120) présentant une surface de sortie (112) sensiblement plane et une surface d'entrée (122) configurée pour capter un flux de lumière (F106) incident émis par une diode électroluminescente (106). La surface d'entrée (122) comprend une face centrale (124) à cheval sur un plan médian (M120) et, de chaque côté du plan médian (M120), une première face latérale (131) et une deuxième face latérale (132), de sorte que le flux de lumière (F106) incident est divisé en trois flux de lumière distincts. Le corps (120) comprend aussi des faces externes de réflexion, qui sont chacune configurée pour réfléchir les flux de lumière associés à chaque face latérale vers la surface de sortie (112).

FIG.4

EP 4 624 802 A1

**Description**

L'invention concerne un guide lumière pour un appareil électrique, ainsi qu'un appareil électrique comprenant un tel guide lumière.

On s'intéresse ici aux appareils électriques ou électroniques comprenant un voyant lumineux illuminé par une ou plusieurs LED, acronyme anglais de diodes électroluminescentes. Le voyant est situé sur une face avant de l'appareil électrique, de manière à indiquer à l'utilisateur des états de fonctionnement de l'appareil électrique. La ou les LED sont en général disposées sur une carte électronique, la carte électronique étant logée dans un boitier isolant de l'appareil électrique, de manière à garantir une distance d'isolement minimale entre les composants électrisés de l'appareil électrique et l'utilisateur.

Il est connu d'utiliser un guide lumière réalisé en un matériau électriquement isolant, de manière à guider la lumière émise par la LED jusqu'à la face avant de l'appareil électrique. Une surface d'entrée du guide lumière est située en regard de la LED, tandis qu'une surface de sortie du guide lumière forme le voyant lumineux. La surface de sortie est globalement orthogonale à un axe de longueur guide lumière. La surface d'entrée est agencée en regard de la LED, de manière à capter un flux de lumière émis par la LED, tandis que la surface de sortie est distante de la LED - et par extension distante de la surface d'entrée- d'une distance minimale. Par exemple, la norme IEC 947-1:2019 - tableaux 13 et 15 - définit des classes d'isolement, qui correspondent à des distances minimales à respecter entre les points électrisés - ou susceptibles d'être électrisés - et l'utilisateur. Les distances d'isolement dépendent notamment de la classe d'isolement recherchée, et de la tension électrique sous laquelle le disjoncteur électrique opère. Dans le cadre de la présente description, on considère principalement deux intervalles de tension électrique, avec un premier intervalle correspondant à une tension inférieure ou égale à 690V, et un deuxième intervalle correspondant à une tension strictement supérieure à 690V. Pour une tension supérieure à 690V, la classe 1 d'isolement impose une distance dans l'air supérieure à 7 mm, et des lignes de fuites supérieures à 10 mm. La classe 2 d'isolation double ces distances. Pour une tension inférieure à 690 V, la classe 2 d'isolation demande une distance dans l'air supérieure à 10 mm.

On s'intéresse en particulier aux voyants présentant une forme allongée, par exemple une forme oblongue. Ainsi la surface de sortie présente une forme allongée selon un axe de largeur. Il est connu de disposer plusieurs LED les unes à côté des autres selon l'axe de largeur pour former un tel voyant allongé, cependant cette configuration entraine une consommation élevée d'énergie électrique. Pour des raisons de limitation de consommation électrique, on cherche ici à limiter au maximum le nombre de LED utilisées pour former un voyant allongé, de préférence avec une seule LED.

Il est connu d'utiliser un guide lumière présentant globalement une forme de trapèze, la surface d'entrée et la surface de sortie étant parallèles l'une à l'autre, la surface d'entrée étant plus courte que la surface de sortie selon l'axe de largeur. De manière connue, plus le guide lumière est long, et plus le flux de sortie est homogène, grâce notamment aux multiples réflexions des rayons lumineux sur les parois latérales du guide lumière. Par exemple, on considère que le flux de sortie est sensiblement homogène lorsque la hauteur du guide lumière est supérieure à 2,5 fois la largeur de la surface de sortie. Un tel guide lumière est cependant relativement encombrant, ce qui n'est peu pratique.

Il est connu d'ajouter des matériaux dispersants, par exemple sous forme de poudre, dans le matériau du guide lumière. Cependant, l'intensité du flux de sortie s'en trouve atténué dès que le guide lumière présente une hauteur supérieure à quelques millimètres, ce qui n'est pas souhaitable, en particulier lorsque la source lumineuse est limitée à une seule LED.

C'est à ces problèmes qu'entend plus particulièrement répondre l'invention, en proposant un guide lumière présentant une surface de sortie allongée, présentant un flux de sortie relativement homogène, avec peu de pertes de lumière, à partir d'une seule LED.

À cet effet, l'invention concerne un guide lumière pour un appareil électrique, le guide lumière comprenant un corps, qui est réalisé en un matériau électriquement isolant, le matériau comprenant une matrice présentant un indice optique compris entre 1,4 et 1,6 et un coefficient de transmission lumineuse supérieur à 90% par millimètre, le corps présentant globalement une forme de prisme s'étendant selon un axe d'épaisseur, le corps présentant, en projection dans un plan transversal à l'axe d'épaisseur une section comprenant :

- une surface de sortie, qui est géométriquement portée par un plan orthogonal à un axe de hauteur et qui présente une forme allongée selon un axe de largeur, l'axe de largeur étant orthogonal à l'axe de hauteur, l'axe d'épaisseur, l'axe de largeur et l'axe de hauteur formant ensemble un repère orthogonal,
- une surface d'entrée, qui est configurée pour capter un flux de lumière incident émis par une diode électroluminescente lorsque la diode électroluminescente est située en regard de la surface d'entrée, la surface d'entrée étant alignée avec la surface de sortie selon l'axe de hauteur, de sorte que le flux lumineux capté ressort principalement par la surface de sortie,
- le corps présente une forme globalement symétrique par rapport à un plan médian du guide lumière, le plan médian étant orthogonal à l'axe de largeur,

dans lequel :

- la surface d'entrée comprend :

- une face centrale, qui est située à cheval sur le plan médian, la face centrale présentant deux bords latéraux opposés, qui sont parallèles à l'axe d'épaisseur, et
- de chaque côté du plan médian, plusieurs faces latérales, qui prolongent la face centrale depuis le bord latéral situé du même côté du plan médian, les faces latérales incluant une première face latérale et une deuxième face latérale, la première face latérale étant intercalée entre la face centrale et la deuxième face latérale,

- de chaque côté du plan médian, et en projection dans le plan transversal, la face centrale, la première face latérale et la deuxième face latérale forment entre elles des angles configurés de sorte que le flux de lumière incident, émis par la diode électroluminescente et traversant la surface d'entrée, est divisé, par réfraction au passage de la surface d'entrée, en trois flux de lumière distincts, les trois flux de lumière incluant :

  - un flux central, qui correspond à la portion du flux lumineux incident réfracté au passage de la portion correspondante de la face centrale, le corps étant configuré pour que le flux central débouche sur une portion centrale de la surface de sortie, formant un flux sortant central,
  - un premier flux, qui correspond à la portion du flux lumineux incident réfracté au passage de la première face latérale,
  - un deuxième flux, qui correspond à la portion du flux lumineux incident réfracté au passage de la deuxième face latérale,

- le corps comprend aussi, de chaque côté du plan médian, des faces externes de réflexion, qui sont intercalées entre la surface de sortie et la surface d'entrée, chaque face externe étant associée à une face latérale respective et étant configurée pour réfléchir la portion du flux lumineux associée à la face latérale correspondante vers la surface de sortie, les faces externes de réflexion incluant :

  - une première face externe de réflexion, qui est associée à la première face latérale, et qui est configurée pour réfléchir le premier flux à l'intérieur du guide lumière, de sorte que le premier flux ainsi réfléchi débouche sur une première portion de la surface de sortie, formant un premier flux sortant,
  - une deuxième face externe de réflexion, qui est associée à la deuxième face latérale, et qui est configurée pour réfléchir le deuxième flux à l'intérieur du guide lumière, de sorte que le deuxième flux ainsi réfléchi débouche sur une deuxième portion de la surface de sortie, formant un deuxième flux sortant,

- le flux sortant central, le premier flux sortant et le deuxième flux sortant forment ensemble un flux sortant de la surface de sortie,
- sur la surface de sortie, la deuxième portion est intercalée entre la première portion et la portion centrale.

Grâce à l'invention, le guide lumière permet de capter le flux lumineux d'une LED et de répartir le flux lumineux ainsi capté sur la surface de sortie significativement plus longue que la LED, avec une intensité lumineuse sensiblement homogène pour l'utilisateur. L'utilisation d'un matériau avec un coefficient de transmission élevé, autrement dit avec une bonne transparence, permet l'utilisation seule LED, ce qui est économe en énergie.

Selon des aspects avantageux mais non obligatoires de l'invention, une telle unité de contrôle peut incorporer une ou plusieurs des caractéristiques suivantes prises isolément ou selon toute combinaison techniquement admissible :

- Un vecteur orthogonal à chaque face externe de réflexion forme, avec un axe orthogonal à la face latérale associée, un angle, supérieur à un l'angle limite $\theta$lim de réflexion défini par la formule :

$$\theta_{lim} = \sin^{-1}\left(\frac{1}{N_{120}}\right),$$

où N120 est l'indice optique du matériau du corps du guide lumière.
- La première face latérale forme, avec la face centrale, un angle compris entre 110° et 130°, alors que la deuxième face latérale forme, avec la première face latérale, un angle compris entre 150° et 180°.
- Le corps est réalisé en un matériau polymère synthétique injectable à chaud, de préférence en polycarbonate ou en poly-méthacrylate de méthyle acrylique.
- Le corps présente une face avant et une face arrière, qui sont parallèles au plan transversal et qui sont orientées à l'opposé l'une de l'autre, la face de sortie reliant la face avant à la face arrière,

  alors qu'au moins d'un côté du plan médian, le corps présente une paire d'évidements, qui sont ménagés en creux sur la face avant et sur la face arrière et qui sont agencés symétriquement par rapport au plan transversal,
  et que chaque évidement présente, en projection sur le plan transversal, un profil définissant trois côtés principaux, qui incluent :

  - un premier côté, qui est délimité par le premier flux après réflexion sur la première face externe,
  - un deuxième côté, qui est délimité par le deuxième flux après réflexion sur la deuxième face externe, et
- un troisième côté, qui est délimité par le flux central entre la face centrale et la surface de sortie.

- Les évidements d'une même paire ménagent entre eux une portion amincie du corps, alors que la portion amincie présente une épaisseur, mesurée selon l'axe d'épaisseur, comprise entre 20 et 50% d'une épaisseur totale du corps, de préférence comprise entre 30 et 40%, de préférence encore sensiblement égale à 33%.
- Les évidements sont traversants et relient la face avant à la face arrière, au travers du corps.
- Le premier côté de chaque évidement est poli, de manière à réfléchir le premier flux après réflexion sur la première externe de réflexion.

L'invention concerne aussi un appareil électrique, qui comprend :

- un boitier, qui est réalisé en un matériau isolant et qui présente une face avant,
- une diode électroluminescente, qui est reçue dans le boitier,
- un guide lumière tel que défini précédemment, la surface de sortie débouchant sur la face avant du boitier, tandis que la surface d'entrée est située en regard de la diode électroluminescente.

Avantageusement :

- l'appareil électrique est une unité de contrôle d'un disjoncteur électrique, la face avant étant configurée pour être orientée vers l'utilisateur lorsque l'unité de contrôle est dans une configuration normale d'utilisation.

L'invention concerne aussi un disjoncteur électrique, qui comprend :

- une unité de coupure, comprenant au moins un dispositif de coupure et un actionneur, le dispositif de coupure étant déclenchable au moyen l'actionneur,
- l'appareil électrique tel que défini précédemment,

dans lequel :

- l'unité de coupure ménage un réceptacle, qui débouche sur une face frontale de l'unité de coupure,
- l'unité de contrôle est reçue dans le réceptacle de l'unité de coupure, de sorte que la face avant de l'unité de contrôle est sensiblement alignée avec la face frontale de l'unité de coupure.

L'invention sera mieux comprise, et d'autres avantages de celle-ci apparaîtront plus clairement à la lumière de la description qui va suivre, d'un mode de réalisation d'un guide lumière, d'un appareil électrique et d'un disjoncteur électrique, conformes à son principe, donnée uniquement à titre d'exemple et faite en référence aux dessins annexés, dans lesquels :

- [Fig 1] la figure 1 représente respectivement, sur deux inserts a) et b), une vue en perspective et une vue en perspective partiellement éclatée d'un disjoncteur électrique conforme à l'invention, le disjoncteur électrique comprenant une unité de contrôle, elle aussi conforme à l'invention ;
- [Fig 2] la figure 2 est une vue en perspective de l'unité de contrôle de la figure 1, l'unité de contrôle comprenant un guide lumière conforme à un premier mode de réalisation de l'invention ;
- [Fig 3] la figure 3 est une vue en perspective du guide lumière de la figure 2 et d'une carte électronique de l'unité de contrôle ;
- [Fig 4] la figure 4 représente, sur deux inserts a) et b), une vue de côté du guide lumière de la figure 2 ;
- [Fig 5] la figure 5 représente, sur trois inserts a), b) et c), une coupe du guide lumière de la figure 2 et de guides lumières conformes à d'autres modes de réalisation de l'invention, et
- [Fig 6] la figure 6 est une vue en perspective d'un guide lumière conforme à un autre mode de réalisation de l'invention.

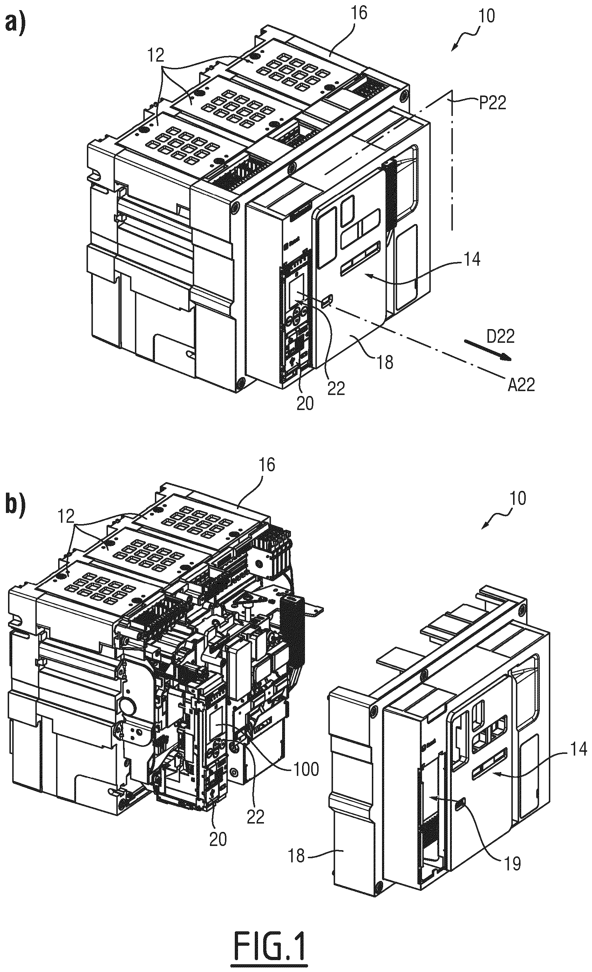

Un disjoncteur électrique 10 est représenté en figure 1. Le disjoncteur électrique 10, dit aussi simplement disjoncteur 10, est ici un disjoncteur multipolaire, en particulier un disjoncteur tripolaire. Le nombre de pôle n'est pas limitatif. De façon connue, un disjoncteur électrique multipolaire comporte, pour chaque pôle électrique, des terminaux de puissance d'entrée et de sortie, qui sont respectivement raccordés ou isolées électriquement l'un de l'autre par un dispositif de coupure du disjoncteur. Le dispositif de coupure comprend par exemple des contacts mobiles séparables, qui sont reçus dans une chambre de coupure du disjoncteur électrique 10 et dont les mouvements sont contrôlés par un actionneur. Ainsi, le dispositif de coupure est déclenchable par l'actionneur. Les chambres de coupures sont ici matérialisées par trois grilles 12 visibles sur une face supérieure du disjoncteur 10, les autres éléments du dispositif de coupure n'étant pas représenté.

Le disjoncteur électrique 10 est destiné à être utilisé au sein d'une installation électrique, par exemple pour contrôler l'alimentation d'une machine-outil. Dans une configuration normale d'utilisation, le disjoncteur électrique 10 est généralement placé au sein d'une armoire électrique, le disjoncteur électrique 10 présentant une face frontale 14, qui est orientée vers l'utilisateur se tenant devant l'armoire électrique. L'armoire électrique n'est pas représentée.

Le disjoncteur électrique 10 comprend une unité de coupure 16, qui comporte en particulier chacune des chambres de coupures, ainsi que le dispositif de coupure et l'actionneur associé.

Le disjoncteur électrique 10 comprend avantageusement un plastron 18, qui est démontable du reste l'unité de coupure 16. Le plastron 18 est réalisé en un matériau électriquement isolant et s'étend globalement selon un plan frontal P14, qui définit une portion de la face frontale 14 du disjoncteur électrique 10, et par extension de l'unité de coupure 16. Le plastron 18 sert ainsi à protéger l'utilisateur de l'unité de coupure 16. À la figure 1 a), le plastron 18 est représenté assemblé à l'unité de coupure 16, ce qui correspond à une configuration d'utilisation normale du disjoncteur 10. À la figure 1 b), le plastron 18 est éloigné de l'unité de coupure 16, cette configuration se retrouvant par exemple lors d'une maintenance de l'unité de coupure 16.

Le disjoncteur électrique 10 comprend aussi une unité de contrôle 20. L'unité de contrôle 20 est configurée pour analyser des états de l'unité de coupure 16 et est configurée pour déclencher l'actionneur en fonction des résultats de ces analyses, séparant ainsi les contacts séparables.

L'unité de contrôle 20 comprenant une face avant 22, La face avant 22 présente une forme globalement plane et est géométriquement portée par un plan avant P22, qui est orthogonal à un axe de profondeur A22 de l'unité de contrôle 20. La face avant 22 est orientée vers l'utilisateur lorsque l'unité de contrôle 20 est dans une configuration normale d'utilisation. La face avant 22 définit ainsi une direction avant D22, qui est parallèle à l'axe de profondeur A22. La direction avant D22 est représentée par une flèche. Les notions de directions telles que « avant », « arrière », « haut », « bas », etc., sont définies en relation aux éléments tels que représentés sur les dessins, sachant qu'il peut en être autrement dans la réalité.

Le plastron 18 comprend une fenêtre 19, par laquelle la face avant 22 de l'unité de contrôle 20 est visible. La fenêtre 19 est préférentiellement obturée par un rabat transparent. Le rabat n'est pas représenté.

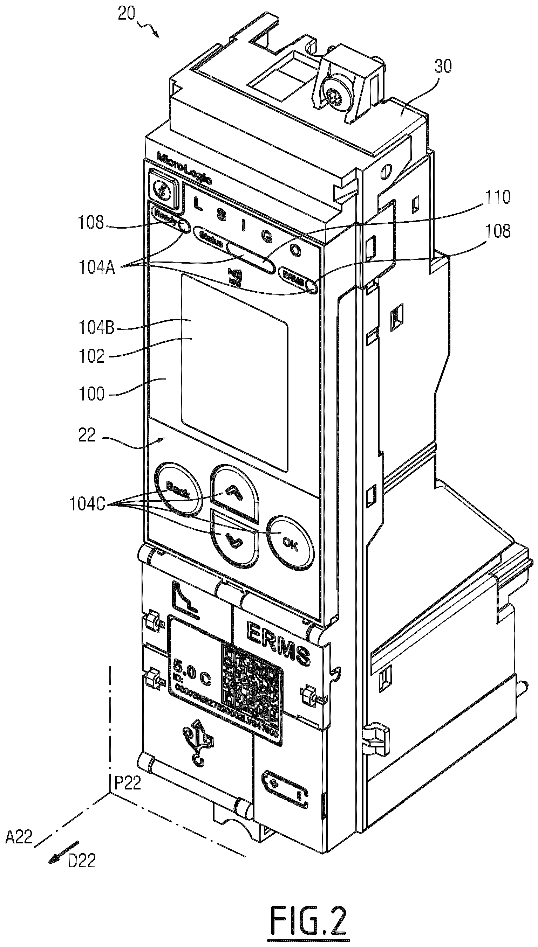

L'unité de contrôle 20 est assemblé à l'unité de coupure 16 de manière réversible. Dans l'exemple des figures 1a) et 1b), l'unité de contrôle 20 est représentée en configuration assemblée à l'unité de coupure 16. L'unité de contrôle 20 est représentée isolément à la figure 2.

L'unité de coupure 16 ménage un réceptacle, qui débouche sur une face frontale 14 de l'unité de coupure 16 et dans lequel est reçue l'unité de contrôle 20, de sorte que la face avant 22 de l'unité de contrôle 20 est sensiblement alignée avec la face frontale 14 de l'unité de coupure 16, comme notamment illustré à la figure 1 a). Le réceptacle n'est pas représenté.

On décrit à présent l'unité de contrôle 20. L'unité de contrôle 20 comprend un boitier 30, qui est réalisé en un matériau isolant et qui forme un volume de réception de divers composants de l'unité de contrôle 20, comme détaillé plus loin.

Le boitier 30 inclut un sous-ensemble avant 100. Par extension, le sous-ensemble 100 appartient à l'unité de contrôle 20. Le sous-ensemble avant 100 comprend une portion centrale 102, qui est globalement plane, qui présente un côté avant 102A et un côté arrière opposé au côté avant 102A.

La portion centrale 102 est ici configurée pour recevoir au moins un élément d'interface homme-machine 104. Le côté avant 102A de la portion centrale 102 est préférentiellement orienté selon la direction avant D22. Une interface homme machine est aussi désignée par son acronyme IHM, ou MHI en anglais. Les éléments d'interface homme machine 104 sont aussi notés simplement « éléments IHM » 104. Dans l'exemple illustré, la portion centrale 102 comprend plusieurs éléments IHM 104. Les éléments IHM 104 incluent ici plusieurs voyants lumineux 104A, une portion transparente 104B, au travers de laquelle un écran peut être observé, et plusieurs boutons 104C. Ces exemples ne sont pas limitatifs, le type, le nombre et l'agencement des éléments IHM 104 pouvant être changés lors de la conception du sous-ensemble avant 100.

Le sous-ensemble avant 100 est assemblé au reste de l'unité de contrôle 20, en particulier au boitier 30, de manière réversible. Il est ainsi possible de remplacer le sous-ensemble avant 100 en cas de dysfonctionnement. La portion centrale 102 forme ainsi une portion de la face avant 22 de l'unité de contrôle 120.

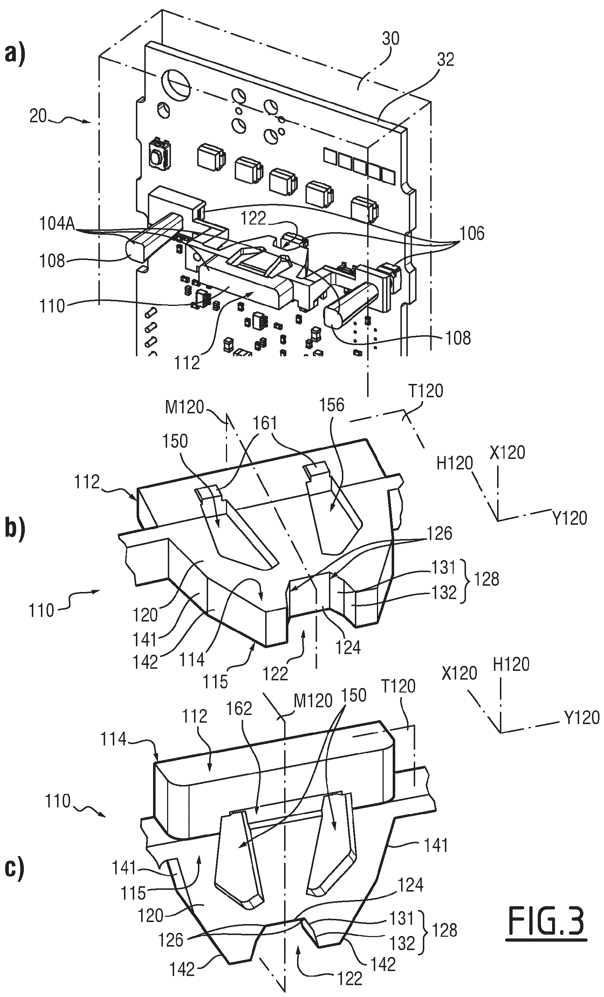

L'unité de contrôle 20 comprend une carte électronique 32, qui est logée dans le boitier 30. Sur la figure 3, le boitier 30 est représenté en transparence, un contour du boitier 30 étant représenté schématiquement en pointillés. La carte électronique 32 comprend un circuit imprimé et plusieurs composants électroniques tels qu'un microprocesseur, une ou plusieurs diodes électroluminescentes, etc. En référence à la figure 3, chacun des voyants 104A est ici obtenu au moyen d'une diode électroluminescente 106, qui est montée sur la carte électronique 32, qui génère un flux lumineux et dont le flux lumineux est guidé, jusqu'à la surface 22 de l'unité de contrôle 20, par un guide lumière 108 respectif. Chaque guide lumière 108 comprend une surface de sortie, par laquelle sort le flux lumineux émis par la diode 106 correspondante, formant ainsi le voyant 104A correspondant. Les diodes électroluminescentes 108 sont aussi désignées par leur acronyme DEL - ou LED en anglais -. Dans le cadre de la présente description, les diodes électroluminescentes sont aussi appelées simplement « diodes ». Dans l'exemple illustré, la carte électronique 32 comprend trois diodes 106, qui sont chacune associées à un guide lumière 108 respectif.

Les guides lumière 108 incluent un guide lumière 110 allongé, qui présente une surface de sortie 112 de forme allongée. Le guide lumière 110 allongé, dit aussi simplement guide allongé 110, est ici situé entre les deux autres guides lumières 108.

On décrit maintenant le guide allongé 110.

Le guide lumière 110 allongé comprend un corps 120, qui est réalisé en un matériau électriquement isolant, le matériau comprenant une matrice présentant un indice optique *n120* compris entre 1,4 et 1,6 et un coefficient de transmission lumineuse supérieur à 90% par millimètre. Optionnellement, d'autres composants sont être ajoutés au matériau, par exemple des charges, sous forme de poudre, pour aider à la fabrication du corps 120 et/ou modifier les propriétés optiques du matériau du corps 120. Le matériau du corps 120 est ainsi considéré comme optiquement homogène et transparent.

Le corps 120 est avantageusement réalisé en un matériau polymère synthétique injectable à chaud. Des exemples préférés de tels matériaux incluent le polycarbonate, noté PC, ou en poly-méthacrylate de méthyle acrylique, noté PMMA. Le polycarbonate présente par exemple un indice optique de l'ordre de 1,6, tandis que le PMMA présente un indice optique de l'ordre de 1,4. On considère de l'air présente un indice optique égal à 1. Le corps 120 est avantageusement réalisé par injection à chaud, dans un moule d'injection.

En variante non illustrée, le corps 120 est réalisé en un matériau minéral, en particulier un verre minéral. Les guides lumières ainsi obtenu sont de bonne qualité mais sont plus onéreux à fabriquer.

Le corps 120 comprend ainsi la surface de sortie 112. La surface de sortie 112 est de préférence globalement plane, une normale à la surface de sortie 112 définissant un axe de hauteur H120 du corps 120. La surface de sortie présente ici une forme sensiblement rectangulaire, les petits côtés du rectangle étant parallèles à un axe d'épaisseur X120 du corps 120, tandis que les grands côtés du rectangle sont parallèles à un axe de largeur Y120 du corps 120. Dans l'exemple illustré, la surface de sortie 112 présente une première dimension, mesurée selon l'axe de largeur Y120 du corps 120, égale à 14 mm, et une deuxième dimension, mesurée selon l'axe d'épaisseur X120, égale à 3,2 mm.

En variante non illustrée, la surface de sortie 112 présente une forme oblongue, voire elliptique, etc. L'axe d'épaisseur X120, l'axe de largeur Y120 et l'axe de hauteur H120 forment ensemble un repère orthogonal.

Le corps 120 présente avantageusement une forme globalement symétrique par rapport à un plan médian M120 du guide lumière, le plan médian M120 étant un plan orthogonal à l'axe de largeur Y120.

Le corps 120 présente ici globalement une forme de prisme s'étendant selon l'axe d'épaisseur X120, le corps 120 présentant, en projection dans un plan transversal T120 orthogonal à l'axe d'épaisseur X120, une section transversale avec un profil sensiblement constant.

Le corps 120 présente une face avant 114 et une face arrière 115, qui sont parallèles au plan transversal T120 et qui sont orientées à l'opposé l'une de l'autre, la face de sortie 112 reliant la face avant 114 à face arrière 115.

La section transversale du corps 120 comprenant ainsi la surface de sortie 112, ainsi qu'une surface d'entrée une surface d'entrée 122, qui est différente de la surface d'entrée et qui est alignée avec la surface de sortie 112 selon l'axe de hauteur H120.

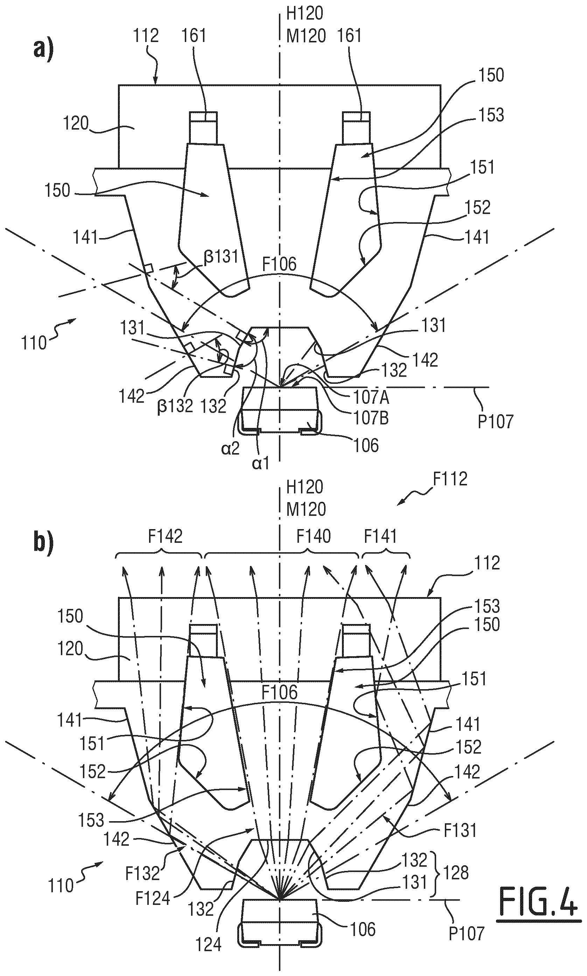

En configuration normale d'utilisation, une des diodes électroluminescentes 106 de la carte électronique 32 est située en regard de la surface d'entrée 122, comme illustré à la figure 3 a) ou à la figure 4. De manière schématique, une diode électroluminescente du type de la diode 106 considérée ici est configurée pour générer un flux lumineux F106 de forme sensiblement conique, caractérisé par un angle au sommet. Dans le cadre de la présente invention, le flux lumineux F106 présente préférentiellement un angle au sommet de l'ordre de 120°. La surface d'entrée 122 est configurée pour capter l'essentiel du flux de lumière F106 émis par la diode électroluminescente 106 située en regard. Ainsi le flux de lumière F106 est un flux incident, qui est capté par la face d'entrée 122 puis qui ressort principalement par la surface de sortie 112, comme expliqué dans la suite.

De manière schématique, on considère que le flux lumineux F106 est émis par un point central 107A situé sur une face supérieure 107B de la diode électroluminescente. La face supérieure 107B de la diode 106 est agencée orthogonalement à l'axe de hauteur H120, le point central 107A étant aligné sur l'axe de hauteur H120. On considère ici que la face supérieure 107B de la diode 106 est globalement plane, sachant qu'il peut en être autrement dans la réalité. La face supérieure 107B est ainsi géométriquement portée par un plan supérieur P107, qui est orthogonal à l'axe de hauteur H120.

La surface d'entrée 122 comprend plusieurs faces, qui sont ici chacune des faces planes et qui forment ensemble la surface d'entrée 112. Deux faces successives de la surface d'entrée 122 forment entre elles un angle non nul et sont agencées de telle sorte que la surface d'entrée 122 est globalement concave, lorsqu'observée depuis l'extérieur du corps 120.

La surface d'entrée 122 comprend ici une face centrale 124, qui est située à cheval sur le plan médian M120. La face centrale 124 présentant deux bords latéraux 126 opposés, qui sont parallèles à l'axe d'épaisseur X120. De chaque côté du plan médian M120, la surface d'entrée 120 comprend plusieurs faces latérales 128, qui prolongent la face centrale 124 depuis le bord latéral 126 situé du même côté du plan médian M120. La face centrale 124 présente ici une forme rectangulaire, voire sensiblement carrée, avec des côtés présentant chacun une longueur d'environ 2,5 mm. Une surface supérieure de la diode 106 est ici située à environ 3 mm de la face centrale 124.

Les faces latérales 128 incluent ici, de chaque côté du plan médian M120, une première face latérale 131 et une deuxième face latérale 132, la première face latérale 131 étant intercalée entre la face centrale 124 et la deuxième face latérale 132.

De chaque côté du plan médian M120, et en projection dans le plan transversal T120, la face centrale

124, la première face latérale 131 et la deuxième face latérale 132 forment entre elles des angles configurés de sorte que le flux de lumière F106 incident, émis par la diode 106 et traversant la surface d'entrée 122, est divisé, par réfraction au passage de la surface d'entrée 122, en trois flux lumineux, les trois flux lumineux incluant :

- un flux central F124, qui correspond à la portion du flux lumineux F106 incident réfracté au passage de la portion correspondante de la face centrale 124, le corps120 étant configuré pour que le flux central F124 débouche sur une portion centrale de la surface de sortie 112, formant un flux sortant central F140,
- un premier flux F131, qui correspond à la portion du flux lumineux F106 incident réfracté au passage de la première face latérale 131, et
- un deuxième flux F132, qui correspond à la portion du flux lumineux F106 incident réfracté au passage de la deuxième face latérale 132.

Le flux central F124, le premier flux F131 et le deuxième flux F132 sont matérialisés schématiquement à la figure 4 b) par plusieurs chemins optiques représentés en traits mixtes.

Grâce à la concavité de la face d'entrée 122, alors qu'avant le passage de la surface d'entrée 122, le flux lumineux F160 incident est considéré comme continu, après le passage de la surface d'entrée 122, le flux central F124 et le premier flux F131 divergent l'un par rapport à l'autre, tandis que le premier flux F131 et le deuxième flux F132 divergent l'un par rapport à l'autre. Par « deux flux divergents », on entend que les chemins optiques de chacun des deux flux tendent à s'éloigner les uns des autres.

La première face latérale 131 forme, avec la face centrale 124, un premier angle $\alpha1$ compris entre 110° et 130°, de préférence compris entre 115° et 125°. Dans l'exemple illustré, le premier angle $\alpha1$ est égal à 120°. La première face latérale 131 présente ici, en projection sur le plan transversal T160, une longueur sensiblement égale à 1,1 mm.

La deuxième face latérale 132 forme, avec la première face latérale 131, un deuxième angle $\alpha2$ compris entre 150° et 180°, de préférence compris entre 160° et 170°. Dans l'exemple illustré, le deuxième angle $\alpha2$ est égal à 164°. La deuxième face latérale 132 présente ici, en projection sur le plan transversal T160, une longueur sensiblement égale à 1,3 mm. On comprend que la forme globale de la face d'entrée peut être ajustée notamment en fonction de la taille de la diode 106, de son éloignement, etc.

Le corps 120 comprend aussi, de chaque côté du plan médian M120, des faces externes de réflexion, qui sont intercalées entre la surface de sortie 112 et la surface d'entrée 122, chaque face externe étant associée à une face latérale respective et étant configurée pour réfléchir la portion du flux lumineux associée à la face latérale correspondante vers la surface de sortie. Les faces externes de réflexion incluent ainsi :

- une première face externe 141 de réflexion, qui est associée à la première face latérale 131, et qui est configurée pour réfléchir le premier flux F131 à l'intérieur du guide lumière 110, de sorte que le premier flux F131 ainsi réfléchi débouche essentiellement sur une première portion de la surface de sortie, formant un premier flux sortant F141,
- une deuxième face externe 142 de réflexion, qui est associée à la deuxième face latérale 132, et qui est configurée pour réfléchir le deuxième flux F132 à l'intérieur du guide lumière 120, de sorte que le premier flux F131 ainsi réfléchi débouche essentiellement sur une deuxième portion de la surface de sortie 112, formant un deuxième flux sortant F142.

Le flux sortant central F140, le premier flux sortant F141 et le deuxième flux sortant F142 forment ensemble un flux sortant F112 de la surface de sortie 112.

Sur la surface de sortie 112, la deuxième portion est intercalée entre la première portion et la portion centrale, de sorte que le flux sortant F112 de la surface de sortie 112 est sensiblement homogène, comme illustré schématiquement à la figure 4 a). Dans la réalité, il est avantageux que le flux sortant central F140, le premier flux sortant F141 et le deuxième flux sortant F142 se chevauchent, de manière à favoriser l'homogénéité apparente du flux sortant F112.

Avantageusement, la face de sortie 112, la surface de sortie présente une rugosité Ra de l'ordre de 1,6 μm, de manière à améliorer l'impression d'homogénéité du flux sortant F112 de la surface de sortie 112. Le corps 120 est ici fabriqué par injection à chaud. Chaque surface du corps 120 présente ainsi un état de surface - en particulier une rugosité - qui est sensiblement identique à un état de surface du moule. La rugosité des surfaces des moules est généralement évaluée selon une échelle « VDI 3400 » - acronyme de l'allemand *« Verein Deutscher Ingenieure »,* ou Société des Ingénieurs Allemands -, qui relie l'indice Charmilles - sans unité- et la rugosité Ra - en μm - des surfaces du moule. La face de sortie 112 présente ainsi un état de surface qui correspond à un indice Charmilles 24.

Avantageusement, la surface d'entrée 122 présente une surface dite « poli-miroir » ou « poli-glass ». Les surfaces polies des pièces en matière plastique sont généralement évaluées selon une échelle « SPI », acronyme de « Society of the Plastics Industry », rebaptisée depuis « Plastics Industry Association », ou Association de l'industrie du plastique. Dans le cadre de la présente description, les surfaces présentant un état de surface poli-miroir présentent un état de surface SPI de niveau « A2 », ce qui correspond à une rugosité Ra comprise entre 0,012 et 0,025 μm.

De préférence, la première face externe 141 de réflexion est agencée de sorte que le premier flux F131 est entièrement réfléchi. De manière similaire, la deuxième face externe 142 de réflexion est avantageusement agencée de sorte que le deuxième flux F132 est entièrement réfléchi.

De manière générale, la loi de Snell-Descartes permet de calculer un angle limite de réflexion totale $\theta lim$ lors de la réflexion à l'interface entre le matériau du corps 120 et l'air, l'angle limite étant mesuré par rapport à un vecteur orthogonal à l'interface considéré :

$$\theta_{lim} = \sin^{-1}\left(\frac{N_{air}}{N_{120}}\right)$$

où Nair est l'indice optique de l'air et N120 est l'indice optique du matériau du corps 120 du guide lumière 110 allongé.

Appliqué au cas présent, en considérant que l'indice de l'air Nair est égal à 1, un vecteur orthogonal à la première face externe 141 de réflexion forme, avec un vecteur orthogonal à la première face latérale 131 associée, un angle β131 supérieur à un l'angle limite $\theta lim$ de réflexion défini par la formule :

$$\theta_{lim} = \sin^{-1}\left(\frac{1}{N_{120}}\right)$$

où N120 est l'indice optique du matériau du corps 120 du guide lumière 110 allongé.

De manière similaire, la deuxième face externe 142 de réflexion est agencée de sorte que le deuxième flux F132 est entièrement réfléchi. Ainsi un vecteur orthogonal à la deuxième face externe 142 de réflexion forme, avec un vecteur orthogonal à la deuxième face latérale 132 associée, un angle β132 supérieur à un l'angle limite $\theta lim$ de réflexion défini par la formule précédente :

$$\theta_{lim} = \sin^{-1}\left(\frac{1}{N_{120}}\right)$$

où N120 est l'indice optique du matériau du corps 120 du guide lumière 110 allongé.

À titre d'illustration, lorsque l'indice optique N120 est égal à 1,4, l'angle limite $\theta lim$ est de l'ordre de 45°, tandis que lorsque l'indice optique N120 est égal à 1,6, l'angle limite $\theta lim$ est de l'ordre de 38°.

De préférence, en projection sur le plan transversal, en tout point de chaque face latérale 128, un axe orthogonal à la face latérale 128 coupe le plan supérieur P107 de la diode 106 par-delà le point central 107A. Grâce à cet agencement, le premier flux F131 et le deuxième flux F132 forment tous un angle non nul avec, respectivement, l'axe orthogonal à la première face latérale 131 et l'axe orthogonal à la deuxième face latérale 132, ce qui ensuite fait que le premier flux F131 et le deuxième flux F132 sont réfléchis sur la face externe de réflexion 141 ou 142 correspondante selon un angle d'incidence inférieur à l'angle limite $\theta lim$.

Le corps 120 présente des évidements 150, qui sont ménagés en creux sur la face avant 114 et sur la face arrière 115 et qui sont agencés symétriquement par rapport au plan transversal T120. Les évidements 150 sont ainsi associés deux à deux, autrement dit agencés par paires, chaque paire étant située d'un côté du plan médian M120. Dans l'exemple illustré, le corps 120 comprend deux paires d'évidements 150, soit au total quatre évidements 150.

Les évidements 150 permettent de limiter les phénomènes de retassures et/ou l'apparition de bulles lors du refroidissement du guide lumière 110 allongé fabriqué par injection à chaud. Autrement dit, les évidements contribuent à améliorer la qualité optique du guide lumière, notamment améliorer l'homogénéité de l'intensité lumineuse sur la face de sortie 112.

Comme expliqué précédemment, la forme spécifique de la face d'entrée 122 fait que le flux lumineux F106 est divisé en trois flux F124, F131 et F132 divergents. Les réflexions sur les faces externes 141 et 142 font que certaines zones à l'intérieur du corps 120, dites « zones mortes », sont traversées par peu de rayons lumineux. Les évidements 150 sont ainsi agencés dans ces zones mortes, de manière à limiter la perte d'intensité lumineuse du flux sortant F140.

Chaque évidement 150 présente, en projection sur le plan transversal T120, un profil définissant trois côtés principaux. Les trois côtés principaux forment un triangle et incluent :

- un premier côté 151, qui est délimité par le premier flux F131 après réflexion sur la première face externe 141,
- un deuxième côté 152, qui est délimité par le deuxième flux F132 après réflexion sur la deuxième face externe 142, et
- un troisième côté 153, qui est délimité par le flux central F124 entre la face centrale 124 et la surface de sortie 112.

Avantageusement, le premier côté 151 de chaque évidement 150 est poli, autrement dit présente une surface « poli-miroir », de manière à réfléchir le premier flux F131 après réflexion sur la première face externe 141 de réflexion, comme illustré à la figure 4 b). De préférence, le premier côté 151, le deuxième côté 152 et le troisième côté 153 sont chacun polis. De préférence, l'ensemble du contour de chaque évidement 150 est poli.

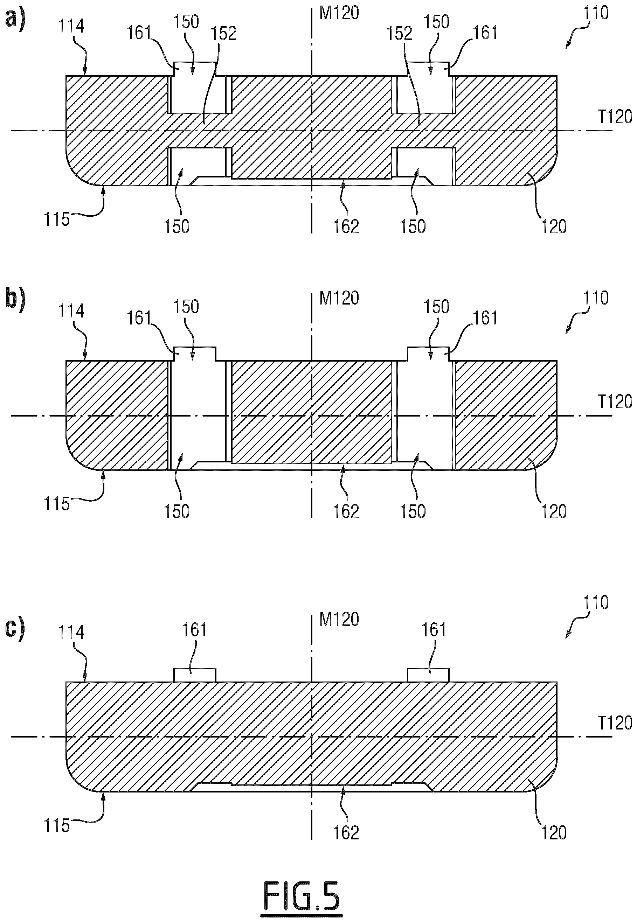

Les évidements 150 sont de préférence partiels, c'est-à-dire que les évidements 150 d'une même paire ménagent entre eux une portion amincie 152 du corps 120, la portion amincie 152 étant est située à cheval sur le plan transversal T120, comme illustré à la figure 5 a). La portion amincie 152 forme ainsi un fond des évidements 150 de la paire correspondante. La portion amincie 152 présente une épaisseur, mesurée selon l'axe d'épaisseur, comprise entre 20 et 50% d'une épaisseur totale du corps, de préférence comprise entre 30 et 40%, de préférence encore sensiblement égale à 33%. On profite ainsi de l'amélioration de la qualité optique du guide lumière 110 allongé, tout en limitant la perte d'intensité lumineuse du flux sortant F140.

En variante, les évidements 150 sont traversants et relient la face avant 114 à la face arrière 115, au travers du corps 120, comme représenté en figure 5 b). Le corps 120 ne comprend alors pas de portion amincie du type de la portion amincie 152 décrite précédemment.

Selon une autre variante, le corps 120 ne comprend pas d'évidement du type des évidements 150 décrits précédemment, comme représenté en figure 5 c).

Dans les exemples illustrés, le corps 120 comprend des organes d'accrochage. Les organes d'accrochage 160 sont prévus pour faciliter l'assemblage du guide lumière 110 allongé au sous-ensemble avant 100 et incluent ici des saillies 161 et un renfoncement 162, qui sont ici ménagés respectivement dans la face avant 114 et la face arrière 115.

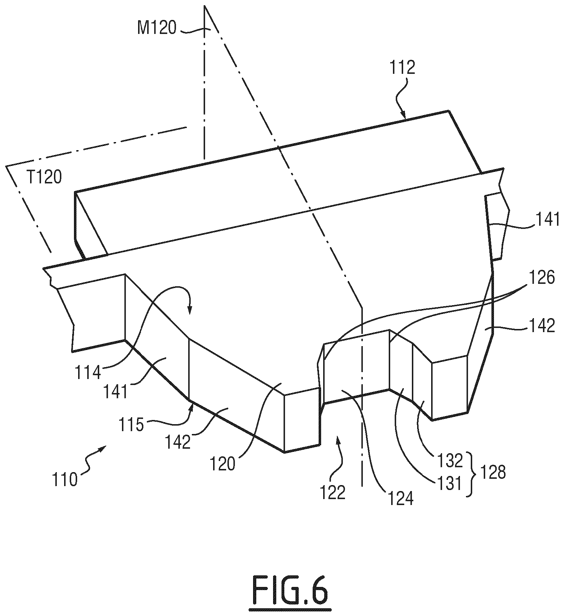

En variante, les faces avant 114 ou arrière 115 ne comprennent aucune saillie ou renfoncement du type des saillies 161 ou du renfoncement 162 décrit précédemment, comme illustré à la figure 6.

Dans les exemples illustrés, la surface de sortie 112 est sensiblement plane. En variante non représentée, la surface de sortie est courbe, par exemple convexe.

Dans l'exemple illustré, l'unité de contrôle 20 du disjoncteur électrique 10 est un exemple d'appareil électrique utilisant le guide lumière 110 allongé. Bien entendu, les principes de l'invention peuvent être transposés à d'autres types d'appareils électriques, le guide lumière 110 allongé étant particulièrement adapté aux applications demandant à la fois une faible consommation d'énergie et/ou une distance d'isolement minimale entre les composants électrisés et l'utilisateur.

Les modes de réalisation et les variantes mentionnées ci-dessus peuvent être combinés entre eux pour générer de nouveaux modes de réalisation de l'invention telle que définie par les revendications.

## Revendications

1. Guide lumière (110) pour un appareil électrique (20), le guide lumière (110) comprenant un corps (120), qui est réalisé en un matériau électriquement isolant, le matériau comprenant une matrice présentant un indice optique compris entre 1,4 et 1,6 et un coefficient de transmission lumineuse supérieur à 90% par millimètre, le corps (120) présentant globalement une forme de prisme s'étendant selon un axe d'épaisseur (X120), le corps (120) présentant, en projection dans un plan transversal (T120) à l'axe d'épaisseur (X120) une section comprenant :

- une surface de sortie (112), qui est géométriquement portée par un plan orthogonal à un axe de hauteur (H120) et qui présente une forme allongée selon un axe de largeur (Y120), l'axe de largeur (Y120) étant orthogonal à l'axe de hauteur (H120), l'axe d'épaisseur (X120), l'axe de largeur (Y120) et l'axe de hauteur (H120) formant ensemble un repère orthogonal,
- une surface d'entrée (122), qui est configurée pour capter un flux de lumière (F106) incident émis par une diode électroluminescente (106) lorsque la diode électroluminescente (106) est située en regard de la surface d'entrée (122), la surface d'entrée (122) étant alignée avec la surface de sortie (112) selon l'axe de hauteur (H120), de sorte que le flux lumineux (F106) capté ressort principalement par la surface de sortie (112),
- le corps (120) présente une forme globalement symétrique par rapport à un plan médian (M120) du guide lumière (110), le plan médian (M120) étant orthogonal à l'axe de largeur (Y120),

dans lequel :

- la surface d'entrée (122) comprend :

  • une face centrale (124), qui est située à cheval sur le plan médian (M120), la face centrale (124) présentant deux bords latéraux (126) opposés, qui sont parallèles à l'axe d'épaisseur (X120), et
  • de chaque côté du plan médian (M120), plusieurs faces latérales (128), qui prolongent la face centrale (124) depuis le bord latéral (126) situé du même côté du plan médian (M120), les faces latérales (128) incluant une première face latérale (131) et une deuxième face latérale (132), la première face latérale (131) étant intercalée entre la face centrale (124) et la deuxième face latérale (132),

- de chaque côté du plan médian (M120), et en projection dans le plan transversal (T120), la face centrale (124), la première face latérale (131) et la deuxième face latérale (132) forment entre elles des angles ($\alpha$1, $\alpha$2) configurés de sorte que le flux de lumière (F106) incident, émis par la diode électroluminescente (106) et traversant la surface d'entrée (122), est divisé, par réfraction au passage de la surface d'entrée (122), en trois flux de lumière distincts, les trois flux de lumière incluant :

  • un flux central (F124), qui correspond à la portion du flux lumineux (F106) incident réfracté au passage de la portion correspondante de la face centrale (124), le corps (120) étant configuré pour que le flux central (F124) débouche sur une portion centrale de la surface de sortie (112), formant un flux sortant central (F140),
• un premier flux (F131), qui correspond à la portion du flux lumineux (F106) incident réfracté au passage de la première face latérale (131),
• un deuxième flux (F132), qui correspond à la portion du flux lumineux (F106) incident réfracté au passage de la deuxième face latérale (132),

- le corps (120) comprend aussi, de chaque côté du plan médian (M120), des faces externes de réflexion, qui sont intercalées entre la surface de sortie (112) et la surface d'entrée (122), chaque face externe étant associée à une face latérale (128) respective et étant configurée pour réfléchir la portion du flux lumineux associée à la face latérale (128) correspondante vers la surface de sortie (112), les faces externes de réflexion incluant :

• une première face externe (141) de réflexion, qui est associée à la première face latérale (131), et qui est configurée pour réfléchir le premier flux (F131) à l'intérieur du guide lumière (110), de sorte que le premier flux ainsi réfléchi débouche sur une première portion de la surface de sortie (112), formant un premier flux sortant (F141),
• une deuxième face externe (142) de réflexion, qui est associée à la deuxième face latérale (132), et qui est configurée pour réfléchir le deuxième flux (F132) à l'intérieur du guide lumière (110), de sorte que le deuxième flux ainsi réfléchi débouche sur une deuxième portion de la surface de sortie (112), formant un deuxième flux sortant (F142),

- le flux sortant central (F140), le premier flux sortant (F141) et le deuxième flux sortant (F142) forment ensemble un flux sortant (F112) de la surface de sortie (112),
- sur la surface de sortie (112), la deuxième portion est intercalée entre la première portion et la portion centrale.

2. Guide lumière (110) selon la revendication 1, dans lequel :

- un vecteur orthogonal à chaque face externe (141, 142) de réflexion forme, avec un axe orthogonal à la face latérale (128) associée, un

angle ($\beta1$, $\beta2$), supérieur à un l'angle limite $\theta lim$ de réflexion défini par la formule :

$$\theta_{lim} = \sin^{-1}\left(\frac{1}{N_{120}}\right),$$

où N120 est l'indice optique du matériau du corps (120) du guide lumière (110).

3. Guide lumière (110) selon l'une quelconque des revendications 1 ou 2, dans lequel :

- la première face latérale (131) forme, avec la face centrale (124), un angle compris entre 110° et 130°,
- la deuxième face latérale (132) forme, avec la première face latérale (131), un angle compris entre 150° et 180°.

4. Guide lumière (110) selon l'une quelconque des revendications 1 à 3, dans lequel :

- le corps (120) est réalisé en un matériau polymère synthétique injectable à chaud, de préférence en polycarbonate ou en poly-méthacrylate de méthyle acrylique.

5. Guide lumière (110) selon l'une quelconque des revendications 1 à 4, dans lequel :

- le corps (120) présente une face avant (114) et une face arrière (115), qui sont parallèles au plan transversal (T120) et qui sont orientées à l'opposé l'une de l'autre, la face de sortie (112) reliant la face avant (114) à la face arrière (115),
- au moins d'un côté du plan médian (M120), le corps (120) présente une paire d'évidements (150), qui sont ménagés en creux sur la face avant (114) et sur la face arrière (115) et qui sont agencés symétriquement par rapport au plan transversal (T120),
- chaque évidement (150) présente, en projection sur le plan transversal (T120), un profil définissant trois côtés principaux, qui incluent :

• un premier côté (151), qui est délimité par le premier flux (F131) après réflexion sur la première face externe (141),
• un deuxième côté (152), qui est délimité par le deuxième flux (F132) après réflexion sur la deuxième face externe (142), et
• un troisième côté (153), qui est délimité par le flux central (F124) entre la face centrale (124) et la surface de sortie (112).

6. Guide lumière (110) selon la revendication 5, dans lequel :

- les évidements (150) d'une même paire ménagent entre eux une portion amincie (152) du corps (120),
- la portion amincie (152) présente une épaisseur, mesurée selon l'axe d'épaisseur (X120), comprise entre 20 et 50% d'une épaisseur totale du corps (120), de préférence comprise entre 30 et 40%, de préférence encore sensiblement égale à 33%.

**7.** Guide lumière (110) selon la revendication 5, dans lequel :

- les évidements (150) sont traversants et relient la face avant (114) à la face arrière (115), au travers du corps (120).

**8.** Guide lumière (110) selon l'une quelconque des revendications 5 à 7, dans lequel :

- le premier côté (151) de chaque évidement est poli, de manière à réfléchir le premier flux (F131) après réflexion sur la première face externe (141).

**9.** Appareil électrique (20), comprenant :

- un boitier (30), qui est réalisé en un matériau isolant et qui présente une face avant (22),
- une diode électroluminescente (106), qui est reçue dans le boitier (30),
- un guide lumière (110) selon l'une quelconque des revendications 1 à 8, la surface de sortie (112) débouchant sur la face avant (22) du boitier, tandis que la surface d'entrée (122) est située en regard de la diode électroluminescente (106).

**10.** Appareil électrique (20) selon la revendication 9, dans lequel :

- l'appareil électrique est une unité de contrôle d'un disjoncteur électrique (10), la face avant (22) étant configurée pour être orientée vers l'utilisateur lorsque l'unité de contrôle est dans une configuration normale d'utilisation.

**11.** Disjoncteur électrique (10), comprenant :

- une unité de coupure (16), comprenant au moins un dispositif de coupure et un actionneur, le dispositif de coupure étant déclenchable au moyen l'actionneur,
- l'appareil électrique (20) selon la revendication 10,

dans lequel :
- l'unité de coupure (10) ménage un réceptacle, qui débouche sur une face frontale (14) de l'unité de coupure (16),
- l'unité de contrôle (20) est reçue dans le réceptacle de l'unité de coupure, de sorte que la face avant (22) de l'unité de contrôle (20) est sensiblement alignée avec la face frontale (14) de l'unité de coupure (16).

a)

b)

FIG.1

20

30

108

110

108

104A

104B

102

100

22

104C

MicroLogic

L  S  I  G

ERMS

5.0 C

P22

A22

D22

## FIG.2

FIG.3

FIG.4

## FIG.5

FIG.6

Europäisches
Patentamt
European
Patent Office
Office européen
des brevets

**RAPPORT DE RECHERCHE EUROPEENNE**

Numéro de la demande

EP 25 16 6666

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 993 633 A1 (VALEO VISION [FR]) 24 janvier 2014 (2014-01-24) | 1-4,9 | INV. F21V8/00 |
| Y | * le document en entier * | 5-8 | G02B19/00 |
| A | | 10,11 | |
| | ----- | | |
| Y | US 2006/274621 A1 (NAGABUCHI DAISUKE [JP]) 7 décembre 2006 (2006-12-07) * figures 1A, 2C, 4, 5 * | 5-8 | |
| | ----- | | |
| Y | US 2008/239203 A1 (TEIJIDO JUAN MANUEL [DE] ET AL) 2 octobre 2008 (2008-10-02) * figures 4-10 * | 5-8 | |
| | ----- | | |
| A | DE 10 2011 082258 A1 (SIEMENS AG [DE]) 7 mars 2013 (2013-03-07) * alinéa [0021] * * figures 1,2 * | 10,11 | |
| | ----- | | |
| A | US 2009/121238 A1 (PECK JOHN PATRICK [US]; DIALIGHT CORP [US]) 14 mai 2009 (2009-05-14) * figures 1-6 * | 1 | |
| | ----- | | |

**DOMAINES TECHNIQUES RECHERCHES (IPC)**

F21V
G02B

Le présent rapport a été établi pour toutes les revendications

| Lieu de la recherche | Date d'achèvement de la recherche | Examinateur |
|---|---|---|
| La Haye | 16 juillet 2025 | Kloppenburg, Martin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 16 6666

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-07-2025

| Document brevet cité au rapport de recherche | Date de publication | Membre(s) de la famille de brevet(s) | Date de publication |
|---|---|---|---|
| FR 2993633 A1 | 24-01-2014 | CN 103574515 A | 12-02-2014 |
| | | EP 2690349 A1 | 29-01-2014 |
| | | FR 2993633 A1 | 24-01-2014 |
| | | US 2014029284 A1 | 30-01-2014 |
| US 2006274621 A1 | 07-12-2006 | JP 4458359 B2 | 28-04-2010 |
| | | JP 2006339121 A | 14-12-2006 |
| | | US 2006274621 A1 | 07-12-2006 |
| US 2008239203 A1 | 02-10-2008 | EP 1975651 A1 | 01-10-2008 |
| | | US 2008239203 A1 | 02-10-2008 |
| DE 102011082258 A1 | 07-03-2013 | CN 103000439 A | 27-03-2013 |
| | | DE 102011082258 A1 | 07-03-2013 |
| | | EP 2568489 A1 | 13-03-2013 |
| US 2009121238 A1 | 14-05-2009 | US 2009121238 A1 | 14-05-2009 |
| | | WO 2009062053 A1 | 14-05-2009 |

EPO FORM P0460

Pour tout renseignement concernant cette annexe : voir Journal Officiel de l'Office européen des brevets, No.12/82